# EUROPEAN PATENT APPLICATION

(11) **EP 4 826 373 A1**
(43) Date of publication of application: **21.10.2026**
(21) Application number: 25170308.8
(22) Date of filing: 14.04.2025
(51) Int. Cl.: G01N 29/036, G01N 29/22, G01N 29/24, G01N 15/10

(54) **DEVICE AND METHOD FOR MECHANICAL PHENOTYPING OF CELLS**

(71) Applicant: Imec VZW, 3001 Leuven (BE)
(72) Inventor: LIU, Liwang, 3051 Sint-Joris-Weert (BE); KEULEMANS, Grim, 1030 Schaarbeek (BE); LAMBERTI, Fabrice-Roland, 00138 Rome (IT); JAFARI, Zeinab, 3000 Leuven (BE); BROUCKAERT, Joost, 8500 Kortrijk (BE)
(74) Representative: AWA Sweden AB

(57) **Abstract**

According to an aspect there is provided a device for mechanical phenotyping of cells, said device comprising:
a sample vessel configured to accommodate a sample fluid comprising cells at an analysis position;
an ultrasound generation unit integrated with the sample vessel,
wherein the ultrasound generation unit is configured to generate an acoustic wave and to transmit the acoustic wave into the sample vessel at the analysis position for causing the acoustic wave to interact with the sample fluid forming a response acoustic wave being affected by the sample fluid; and
an ultrasound detection unit integrated with the sample vessel, wherein the ultrasound detection unit is configured to detect the response acoustic wave and to generate a signal representing information of a cell in the sample fluid.

## Description

### Technical field

The present disclosure relates to analysis of biological cells, and more specifically to a device and a method for mechanical phenotyping of cells.

### Background

The role of cell mechanics is pivotal in many essential cellular events such as migration, differentiation, and malignant transformation. For example, in stem cell technology and tissue engineering, elastic properties of cells have shown to be important in determining stem cell differentiation and the cell's regenerative potential. In cancer and oncology, cell and nuclear softening have been associated with DNA damage, cancer invasion, tumor malignancy and metastatic potential.

The mechanical properties of the cells may be characterized by imposing and sensing mechanical forces and displacement onto the cells.

For example, atomic force microscopy (AFM), magnetic bead twisting, and micropipette aspiration rely on the direct measurement of cell deformation. These techniques require contact and/or invasive interrogation of cells with mechanical probes. The operational complexity limits the speed of sample analysis and makes it challenging to meet statistical standards.

Other techniques that may be used to study cell mechanics are non-contact and non-invasive approaches such as optical tweezers and optical stretchers. However, they often require high-fluence laser illumination to create optical forces, which can induce local heating that might damage the cell structure and influence the mechanical properties. Another drawback is that complicated and costly instrumentation may be required.

Another approach is to study hydrodynamics of fluid-cell interactions. This approach allows indirect measurement of the mechanical properties of the cells, by using an imaging system to capture the event of how a cell passes through a constricted narrow channel upon extensional or shear flow, and analyzing the transit time and size change of the cell. However, the channel needs to be designed according to the cell type, morphology, and size, and large variations in geometry or morphology may therefore lead to inaccurate statistical results for a large population of cells. Moreover, fast imaging systems are expensive and bulky, and have limited potential for analyzing a large number of samples in parallel, for further increasing the throughput.

Hence, there is a need in the art for further improvements related to mechanical phenotyping of cells.

### Summary

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided a device for mechanical phenotyping of cells, said device comprising:
a sample vessel configured to accommodate a sample fluid comprising cells at an analysis position;
an ultrasound generation unit integrated with the sample vessel, wherein the ultrasound generation unit is configured to generate an acoustic wave and to transmit the acoustic wave into the sample vessel at the analysis position for causing the acoustic wave to interact with the sample fluid forming a response acoustic wave being affected by the sample fluid; and
an ultrasound detection unit integrated with the sample vessel, wherein the ultrasound detection unit is configured to detect the response acoustic wave and to generate a signal representing information of a cell in the sample fluid.

Mechanical phenotyping of cells is a procedure used to measure and analyze the mechanical properties of cells, such as their stiffness, elasticity, and viscosity. By way of example, such analysis may be made over large populations, from which the identification/quantification of sub-populations may be made. These properties may provide valuable insights, at single-cell level, into the cell's heterogeneity, physiological state, function, and potential changes due to disease or external stimuli.

The device of the present disclosure enables non-contact and non-invasive analysis of cell mechanics. It may detect one or more mechanical properties of single cells by analyzing the interaction between high-frequency acoustic waves and biological cells at the analysis position.

By way of example, the device may find application in mechanics-informed disease diagnosis, such as cancer diagnostics, and therapeutic efficacy tests, such as tests of cytoskeletal drugs, at single-cell level. Cytoskeletal drugs are often employed in treating cancer or disorders. The device of the present disclosure may provide input to allow screening for drug sensitivity resistance and sensitivity to chemotherapeutics.

By the term "sample vessel" is here meant any type of vessel that may accommodate a sample fluid, either wherein the sample fluid is stationary in the sample vessel or wherein the sample vessel is configured to transport a flow of the sample fluid through the sample vessel. Typically, the sample vessel is a sample vessel configured to be used within life science or medical research, in which samples may be stored, grown, and/or analyzed.

Given as non-limiting examples, the sample vessel may be made of a plastic or glass material fabricated during the clean room fabrication process or added after the clean room fabrication process.

The analysis position is a specific position of the sample vessel at which the acoustic wave may be transmitted into the sample vessel to interact with the sample fluid and the cells therein, thereby forming the response acoustic wave. The response acoustic wave from the analysis position may subsequently be detected by the ultrasound detection unit. Put differently, the analysis position is the position of the sample vessel at which the sample fluid is analyzed, and more specifically in which the cells of the sample fluid are analyzed.

It serves to mention that the sample vessel may be a stand-alone sample vessel, or it may alternatively be part of a larger structure such as a plate comprising an array of sample vessels.

Given as non-limiting example, the sample vessel may be a microwell or a microfluidic channel. As such, the sample vessel may form part of a microwell plate or a microchannel plate.

The ultrasound generation unit is configured to generate an acoustic wave that is suitable for sensing mechanical properties of cells. The diameter of biological cells is typically around 10 µm and the speed of sound in a cell is about 1550 m/s. A suitable frequency of the acoustic wave generated by the ultrasound generation unit may therefore be in the sub-GHz range, such as about 100 MHz. The acoustic wave generated by the ultrasound generation unit is thus an ultrasonic acoustic wave, i.e. above 20 kHz. Given as non-limiting examples, the acoustic wave may have a frequency between 80 MHz and 300 MHz, such as 120 MHz. However, it is conceivable that the acoustic wave may alternatively have a higher frequency, such as 500 MHz or even GHz range. Typically, the acoustic wave is generated as a train of acoustic pulses. However, it is conceivable that the acoustic wave may alternatively be generated as continuous acoustic wave.

By way of example, the ultrasound generation unit may be any one of an optoacoustic transducer (OAT) or an electroacoustic transducer (EAT). These types of ultrasound generation units may be configured to generate an acoustic wave of such high frequency.

The device is configured to detect information of a cell. This is provided by the ultrasound generation unit transmitting the acoustic wave into the sample vessel, so that the acoustic wave may interact with the sample fluid in the sample vessel, and with a cell, in case a cell is present in the sample fluid at the analysis position. The interaction may affect the acoustic wave, thereby forming a response acoustic wave, which may carry information about properties of the cell at the analysis position.

The ultrasound detection unit is configured to detect the response acoustic wave and to generate a signal representing information about the cell in the sample fluid. By way of example, the ultrasound detection unit may be an optical ultrasound transducer. The optical ultrasound transducer may be based on integrated photonics. Further, the optical ultrasound transducer may comprise an optical interferometer or ring-resonator. By way of further example, the ultrasound detection unit may be an electrical ultrasound transducer. The electrical ultrasound transducer may be a micromachined ultrasound transducer.

The types of ultrasound generation units and ultrasound detection units mentioned above may all be designed in a compact format. Moreover, they may all be integrated with the sample vessel. By way of example, they allow integration with microfluidic devices or microwells, to provide a compact device. This, in turn, enables fitting a large number of devices into a small space. By way of further example, this allows for integrating a plurality of ultrasound generation units and a plurality of ultrasound detection units with a plurality of microfluidic channels of a microchannel plate, or with a plurality of microwells of a microwell plate, wherein each generator/detector pair is associated with a mutually unique microfluidic channel or microwell. In the manner described above, a large number of devices may be arranged and operate in parallel to perform a large number of analyses simultaneously, in a compact solution.

According to an embodiment, the sample vessel may be arranged in a layer extending in a plane. The ultrasound generation unit and the ultrasound detection unit may be arranged in other layers extending in other planes being parallel to the plane of the sample vessel.

Thus, in case the sample vessel forms part of a plurality of sample vessels being arranged in the same layer, the ultrasound generation unit and the ultrasound detection unit may form part of a plurality of ultrasound generation units and a plurality of ultrasound detection units, respectively, arranged in layers extending in planes parallel to the plane of the plurality of sample vessels.

According to an embodiment, the ultrasound generation unit is arranged on a first side of the sample vessel and the ultrasound detection unit is arranged on a second side of the sample vessel, wherein the second side is opposite to the first side in relation to the sample vessel.

In such an arrangement, the acoustic wave from the ultrasound generation unit may be transmitted across the sample vessel. The response acoustic wave may thus be formed by interaction with the sample fluid when the acoustic wave is transmitted across the sample vessel. The response acoustic signal may subsequently be detected by the ultrasound detection unit on the second side.

According to an embodiment, the ultrasound generation unit and the ultrasound detection unit are both arranged on a first side of the sample vessel. Put differently, the ultrasound generation unit and the ultrasound detection unit are both arranged on the same side of the sample vessel.

In such an arrangement, the acoustic wave from the ultrasound generation unit may be transmitted into the sample vessel from the first side. The response acoustic wave may thus be formed by reflection and/or scattering of the acoustic wave by the sample fluid, back towards the first side of the sample vessel. The response acoustic signal may subsequently be detected by the ultrasound detection unit on the first side.

It serves to mention that, although described here as a device for mechanical phenotyping of cells, the device may be used for analysis of any micron-sized living or non-living objects, such as polymer beads or capsules.

An advantage is that a device for non-contact and non-invasive mechanical phenotyping of cells may be provided. Physical contact with the cells by means of mechanical probes or constricted narrow channels is not required. Moreover, no high light fluence from e.g. a laser illuminating the cells is required, which is otherwise used in optical tweezer or stretcher based mechanical-probing tools. By avoiding illumination, the risk of inducing local heating may be eliminated, that might otherwise damage the cell structure and influence the mechanical properties.

Another advantage is that label-free mechanical phenotyping of cells may be provided. This, in turn, eliminates the risks otherwise related to label-based analysis of cells, such as the label interfering with the cellular functions, or the label being toxic to the cells. Further, the chemical reagents and labeling molecules are expensive. Therefore, by eliminating the use of these substances, label-free mechanical phenotyping of cells may also be provided at a lower cost.

Yet another advantage is that a device for mechanical phenotyping of cells may be provided, enabling simultaneous detection of multiple properties of the cells. By the present arrangement, several biophysical characteristics may be measured, such as acoustic impedance, speed of sound, and density, in a single run measurement.

Yet another advantage is that a device for mechanical phenotyping of cells may be provided that is versatile with respect to cell size and cell morphology. In this manner, the analysis of the device comprises high tolerance for diversity of size and morphology typically existing in larger populations of cells, without involving the use of restricted channel in the fluidics-dynamic based deformability cytometry, thus reducing significantly the risk of cell clogging.

Yet another advantage is that a device which is highly scalable may be provided. The integration of the ultrasound generation unit and the ultrasound detection unit with the sample vessel, enables the device to be very compact. By way of example, the manner of arranging the generation unit, detection unit and sample vessel in different parallel planes according to an embodiment, allows a plurality of devices to be arranged for example side by side, such that a plurality of sample vessels are arranged in a common plane, and that the plurality of ultrasound generation units and a plurality of ultrasound detection units are arranged in one or more other planes parallel to the plane of the plurality of sample vessels. Said arrangement allows for a system for mechanical phenotyping to be provided, comprising a high number of devices in a small volume. Such a system may significantly scale up the analysis, since many samples may be analyzed in parallel.

According to an embodiment, the signal generated by the ultrasound detection unit represents overall information of a property of the cell.

It is conceivable that the acoustic wave may interact with the cell in its entirety, i.e. the full cell. However, it is also conceivable that the acoustic wave may not necessarily interact with the full cell. However, the acoustic wave may typically interact with at least a major part of the cell.

The measurement signal from the ultrasound detection unit may thus provide information on the overall property of the cell, as an average representation, rather than information from merely a small portion of the cell, such as a point measurement. An arrangement based on point measurements may otherwise require that the point is scanned across the cell, such that multiple measurements may be provided in multiple points of the cell, in order to provide information of the overall the property of the cell.

By the device according to the present disclosure, however, an average measurement of the property of the cell may be provided in a single measurement.

An advantage with this embodiment is that a device for mechanical phenotyping of cells enabling high throughput may be provided. Acquiring a measurement of a cell is fast, since the detected signal represents overall information of the property of the cell. This arrangement eliminates the need for time consuming image sequencing of the cell movements, or the need for scanning point measurements across the cell to retrieve overall information of the cell. In the present arrangement, a single acoustic pulse may provide overall information of the cell in a short time. This, in turn, enables analysis to be made not only on stationary cells, but also on moving cells such as cells in a flow. The sample vessel may therefore be for example a flow channel, wherein the sample fluid comprising cells may flow, thereby allowing analysis of cells at high throughput.

According to an embodiment, the device is configured to detect the response acoustic wave with a spatial resolution in the range of 1 µm to 20 µm. By way of example, the device may be configured to detect the response acoustic wave with a spatial resolution, in a lateral plane along the width of the cell, in the range of 5 µm to 20 µm. This is typically determined by the sensor surface area of the ultrasound detection unit. By way of further example, the device may be configured to detect the response acoustic wave with a spatial resolution, in the depth across the cell, in the range of 2 µm to 10 µm. This is typically determined by the wavelength of the acoustic wave.

According to an embodiment, the signal generated by the ultrasound detection unit represents information of any one of a biomechanical property or a dimensional property of the cell.

Typical biomechanical properties of interest in mechanical phenotyping of cells are speed of sound, acoustic impedance, and density. A typical dimensional property of interest in mechanical phenotyping of cells is cell diameter.

According to an embodiment, the signal generated by the ultrasound detection unit represents information of any one of a delay from transmission of the acoustic wave into the sample vessel to detection of the response acoustic wave by the acoustic wave detection unit, or a difference in an amplitude of the response acoustic wave detected by the ultrasound detection unit with respect to an amplitude of the acoustic wave transmitted into the sample vessel.

By way of example, the signal generated by the ultrasound detection unit may be acquired in several different manners, such as by means of an oscilloscope or a computer.

The acquisition may be triggered upon transmission of the acoustic wave from the ultrasound generation unit into the sample vessel. The response acoustic wave may be detected by the ultrasound detection unit at a slightly later point in time. The delay between transmission and detection may depend on the speed of sound of the medium at the analysis position. In case a cell is present at the analysis position a different delay may be detected as compared to when only sample fluid without any cell is present at the analysis position. Since the speed of sound of the sample fluid without cells is known, the speed of sound in the cell may be determined.

Further, the difference in an amplitude of the response acoustic wave detected by the ultrasound detection unit with respect to an amplitude of the acoustic wave transmitted into the sample vessel may also be determined. And by comparing the difference for the case when a cell is present in the analysis position to the difference for the case when only sample fluid without any cell is present in the analysis position, the acoustic impedance of the cell may be determined, since the acoustic impedance of the sample fluid is known.

It serves to mention that other properties of the cells may be determined by the present arrangement, such as the cell density. Further, the frequency dependence of the amplitude damping may be used to provide information on the viscosity of the cell.

An advantage with this embodiment is that the properties such as speed of sound and acoustic impedance of the cell may be determined without the need for any precise knowledge of the cell dimensions. Thus, the device is not limited to be used with cells of a predefined cell size, but is rather generic in terms of application to various cell sizes.

According to an embodiment, the device further comprises a processing unit, wherein the processing unit is configured to determine any one of an acoustic impedance of the cell or a size of the cell, based on the signal from the ultrasound detection unit.

It serves to mention that the processing unit may be configured to determine any mechano-acoustic parameter, based on the signal from the ultrasound detection unit. By way of example, such a mechano-acoustic parameter may be acoustic impedance of the cell or a size of the cell, but may alternatively be any other suitable mechano-acoustic parameter of the cell.

The processing unit may be implemented as a general-purpose processing unit, such as a central processing unit (CPU), which may execute the instructions of one or more computer programs in order to implement the method. The processing unit may alternatively be implemented as firmware arranged in an embedded system, or as a specifically designed processing unit, such as an Application-Specific Integrated Circuit (ASIC) or a Field-Programmable Gate Array (FPGA), which may be configured to implement the method.

The processing unit may be arranged internally in the device. Alternatively, the processing unit may be arranged in an external unit, or it may be processing unit of an external computer not being part of a common physical housing holding the device. Data may be transferred to the processing unit, either by a wired connection or wirelessly. As yet another alternative, the processing unit may be distributed among physical units, such that parts of the processing may be performed in different physical units.

According to an embodiment, the ultrasound generation unit is a high frequency acoustic wave generation unit, configured to generate an acoustic wave with a wavelength not exceeding a diameter of the cell.

An acoustic wave with a shorter wavelength, and thus a higher frequency, may provide better spatial resolution. In order to determine what acoustic wave frequency f to use, the estimated cell diameter, d, and the speed of sound, *v*, in the sample fluid may be used in the following manner: $\frac{v}{d} = f$

By way of example, in case the cell diameter is 10 µm, and the speed of sound in the sample fluid is 1550 m/s, the frequency of the acoustic wave may be determined as: $\frac{1550 m / s}{10 μm} = 155 MHz$

Therefore, in order for the wavelength of the acoustic wave not to exceed the diameter of the cell, the acoustic wave frequency should not be lower than 155 MHz, in the present example.

Given as non-limiting examples, cell diameters may be in the range of 10 µm to 15 µm.

Given as non-limiting examples, the acoustic wave may have a frequency between 80 MHz and 300 MHz, such as 100 MHz or 120 MHz. However, it is conceivable that the acoustic wave may alternatively have a higher frequency, such as 500 MHz or GHz range.

An advantage with the present embodiment is that a device for mechanical phenotyping may be provided, with a spatial resolution well suited for analyzing single cells.

According to an embodiment, the ultrasound generation unit comprises an optoacoustic transducer, OAT.

An OAT may comprise a layer of optically absorbing film arranged adjacent to the sample vessel, such as adjacent to the first side of the sample vessel. The film may be made by depositing a layer of metal onto a substrate. The substrate may be a separate part from the sample vessel, or it may alternatively form part of the sample vessel. Given as non-limiting examples, the absorbing layer used for the layer may be Gold, Platinum, Titanium, or any other suitable metal. By way of example, the layer of metal film may have a of thickness of around 100 nm.

The OAT may further comprise a pulsed light source. By way of example, the light source may be a laser or an LED. The light pulse from the light source may be directed towards and focused onto the metal layer. For example, the light pulse may be guided through the optically transparent substrate towards the metal layer. Upon the light pulse reaching the metal layer, energy in the light pulse may be absorbed by the metal layer, and the energy may thereby be at least partially converted into an acoustic wave at high frequency.

It serves to mention that the metal layer may block the light pulse, thereby preventing the light pulse from entering into the sample fluid in the sample vessel. In this manner, the cells in the sample vessel are shielded from the light pulse, and thereby potential light damage or toxicity on cells may be prevented.

The light pulse from the light source may be guided towards the metal film by simply arranging the light source for outputting the light pulse towards the metal film. Alternatively, the OAT may form part of a photonics integrated circuit, PIC, configured to guide the light pulse, for example in the substrate functioning as a waveguide, to the metal layer. In such case, a grating coupler may be provided in the PIC, to redirect the light at the analysis position towards the metal film. By way of example, the grating coupler may comprise SiN due to its high linearity even at high powers.

It serves to mention that the substrate may further function as a thermal sink, allowing dissipation of accumulated heat caused by long-term light pulse heating.

According to an embodiment, the ultrasound generation unit comprises an electroacoustic transducer, EAT.

An electroacoustic transducer, EAT, may allow generation of acoustic waves from a voltage or current input. By way of example, an electroacoustic transducer may be a piezoelectric transducer or capacitive transducer. A piezoelectric transducer may typically be configured to generate acoustic waves at frequencies from below 100 MHz up to several hundreds of MHz, or even GHz range. Given as non-limiting examples, piezoelectric transducers may be based on Lead Zirconate Titanate (PZT), Zinc Oxide (ZnO), Lithium Niobate (LiNbO3), or Scandium-Doped Aluminum Nitride (ScAIN). Piezoelectric Micromachined Ultrasonic Transducers (pMUTs), thin-film bulk acoustic resonator (FBAR) or solidly-mounted resonator (SMR), or interdigital transducers (IDTs) based on these materials may be manufactured with CMOS-compatible materials and techniques.

An advantage with this embodiment is that since these electroacoustic transducers may be manufactured with CMOS technology, they are well suited for large-scale production and may easily be integrated with the sample vessel, such as microfluidic channels or microwell plates. Further, manufacturing and integration may be provided at a low cost.

According to an embodiment, the ultrasound detection unit comprises an optical ultrasound transducer based on integrated photonics.

An optical ultrasound transducer may be any optical system capable of detecting ultrasound by converting the change of the transducer's optical/photonic characteristics, due to perturbation caused by upcoming incident acoustic waves, into a measurable voltage signal. By way of example, these optical/photonic characteristics may be transmission, absorption, reflection, phase, and/or polarization properties.

According to an embodiment, the optical ultrasound transducer comprises any one of a Mach Zehnder interferometer, or an optical resonator such as a Fabry-Perot cavity, or a micro-ring resonator. By way of example, said transducers may be fabricated in clean room facilities to reach small footprints comparable to cell size.

In the Mach Zehnder interferometer, a light beam propagating in a waveguide may be split up into two separate waveguiding arms. In one of the arms, the optical path length through the arm may sensitive to an incident acoustic wave. Thus, when the response acoustic wave is incident on the interferometer, the response acoustic wave causes a phase shift for the light passing through that arm. Upon recombination of the light in the two arms, the modulated phase difference caused by the response acoustic wave between the two signals results in an amplitude modulation, which may be used to detect the response acoustic wave. It serves to mentioned that the Mach Zehnder interferometer may be configured to be balanced or unbalanced.

In case the optical ultrasound transducer comprises a micro-ring resonator, the micro-ring resonator is typically coupled to a waveguide and integrated with an acoustic membrane across the micro-ring. Light with a broadband spectrum may be transmitted in the waveguide, and the part of the spectrum corresponding to the resonance frequency of the micro-ring resonator may be coupled into the micro-ring resonator. The remaining light spectrum may therefore show a dip at the resonance frequency. The resonance frequency is dependent on the micro-ring circumference. An incident response acoustic wave may strain the membrane and therefore affect the micro-ring's effective optical path or circumference. This may cause a shift in the resonance frequency, which may be detected in the remaining light spectrum.

In case a plurality of sample vessels is used, a plurality of micro-ring resonators may be provided with different ring circumferences for different sample vessels. A single waveguide may be used to provide broadband light to the plurality of micro-ring resonators. In this manner, the different portions of the broadband light spectrum may be associated with a mutually unique micro-ring resonator. This enables read-out of the response from all of the plurality of micro-ring resonators by means of a single waveguide.

According to an embodiment, the ultrasound detection unit comprises any one of a micromachined ultrasound transducer or a thin-film bulk acoustic resonator.

According to an embodiment, the micromachined ultrasound transducer comprises any one of a piezoelectric micromachined ultrasound transducer or a capacitive micromachined ultrasound transducer in the receiver mode.

According to an embodiment, the ultrasound detection unit comprises a thin-film bulk acoustic resonator (FBAR) or solidly-mounted resonator (SMR).

It is conceivable that in case the ultrasound generation unit is an electro-acoustic transducer, the generator and detector may share some of the same components, for both generation and detection. In this case, a reflection of the response acoustic wave may be detected, rather than a transmitted response.

An advantage is that all the above-mentioned ultrasound generation units and ultrasound detection units may be fabricated on Silicon wafers with CMOS compatible technology. Using CMOS technology offers a high degree of freedom in integration with sample vessels such as microchannel plates and microwell plates. In turn, the device allows for being scaled up to a large number of parallel devices, significantly increasing throughput.

Another advantage is that the device may be manufactured in a cost-effective production.

According to an embodiment, the device further comprises any one of a bright-field microscopy system or a phase contrast microscopy system, configured to image a morphology of the cell.

According to an embodiment, the device is a device for flow cytometry, and
wherein the sample vessel is a microfluidic channel configured to transport a flow of the sample fluid comprising cells to the analysis position.

According to an embodiment, the microfluidic channel is configured to transport the sample fluid for transporting cells past the analysis position one by one.

By way of example, single cells may be aligned to pass through the microfluidic channel at a certain flow rate, controlled by an automated syringe pump. When a cell passes the analysis position, the ultrasound generation unit may generate an acoustic wave which is transmitted into the microfluidic channel. The cell may interact with the acoustic wave forming a response acoustic wave which may be detected by the ultrasound detection unit.

As mentioned above, the device allows for analyzing not only stationary cells, but also moving cells. In microfluidic channels, the flow speed is typically in the range 100-1000 µl/min.

According to an embodiment, the acoustic wave is transmitted across a flow direction of the flow of sample fluid in the microfluidic channel.

An advantage of this embodiment is that a large number of devices may be arranged and operating in parallel to perform a large number of analysis simultaneously, in a compact solution. Microfluidic channels may arranged in parallel in large numbers on a microchannel plate. An ultrasound generation unit and an ultrasound detection unit may be integrated with each of the microfluidic channels, providing a compact device with high throughput.

According to an embodiment, the sample vessel is a microwell configured to hold the sample fluid comprising cells at the analysis position.

The cells may adhere on the substrate or suspend in the fluid.

According to a second aspect there is provided a system for mechanical phenotyping of cells, said system comprising a plurality of devices according to the first aspect.

It should be realized that in case the ultrasound generation unit optoacoustic transducer, a common metal layer may be arranged for the plurality of ultrasound generation units, illuminated by a common light beam illuminating a large surface, for example the full surface of the substrate, on top of which the plurality of sample vessels may be arranged.

An advantage is that by providing a system comprising a plurality of devices, and thus a plurality of the sample vessels parallelization of the analysis may be provided, which in turn provides high throughput.

Another advantage is that in said system, the ultrasound generation unit and/or the ultrasound detection unit may share some components across multiple sample vessels, making manufacturing less complex as well as more cost efficient.

According to an embodiment, the system comprises a photonic integrated circuit, PIC, comprising the plurality of ultrasound generation units and the plurality of ultrasound detection units, wherein the PIC is integrated with the plurality of sample vessels.

It is conceivable that the plurality of ultrasound generation units may be a plurality of optoacoustic transducers, and that the plurality of ultrasound detection units may be a plurality of optical ultrasound transducers. In such a case both the plurality of ultrasound generation units and the plurality of ultrasound detection units may form part of the PIC.

In case the plurality of ultrasound generation units is arranged on a first side of the plurality of sample vessels and the plurality of ultrasound detection units is arranged on a second side of the plurality of sample vessels, opposite to the first side, two separate PICs may be produced, i.e. one PIC comprising the plurality of ultrasound generation units and another PIC comprising the plurality of ultrasound detection units. The two PICs may then be integrated on either side of the plurality of sample vessels, such as a microchannel plate or a microwell plate, by means of wafer-bonding. In the present disclosure, such an integrated component may be considered a single PIC, although some of the parts may initially have been manufactured separately.

It serves to mention that, as an alternative to a PIC with optical implementation of generation and detection, it is conceivable that the device may comprise electrical implementation for generation and detection, for example in case the plurality of ultrasound generation units are a plurality of electroacoustic transducers, and the plurality of ultrasound detection units are a plurality of micromachined ultrasound transducer, each comprising a piezoelectric micromachined ultrasound transducer or a capacitive micromachined ultrasound transducer.

Further, alternatively a hybrid implementation is conceivable, comprising optical as well as electrical implementation. By way of example, the ultrasound generation may be optoacoustic, and the ultrasound detection may be electroacoustic, or vice versa.

According to a third aspect there is provided a method for mechanical phenotyping of cells, said method comprising:
accommodating, in a sample vessel, a sample fluid comprising cells at an analysis position;
generating, by an ultrasound generation unit integrated with the sample vessel, an acoustic wave;
transmitting the acoustic wave into the sample vessel at the analysis position for causing the acoustic wave to interact with the sample fluid forming a response acoustic wave being affected by the sample fluid; and
detecting, by an ultrasound detection unit integrated with the sample vessel, the response acoustic wave; and
generating a signal representing information of a cell in the sample fluid.

Effects and features of the second and third aspects are largely analogous to those described above in connection with the first aspect. Embodiments mentioned in relation to the first aspect are largely compatible with the second and third aspects. It is further noted that the disclosure relates to all possible combinations of features unless explicitly stated otherwise.

Other objectives, features and advantages of the present disclosure will appear from the following detailed description, from the attached claims as well as from the drawings.

### Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.
Fig. 1A schematically illustrates a device for mechanical phenotyping of cells, the device comprising a microfluidic channel.
Fig. 1B schematically illustrates a system for mechanical phenotyping of cells, the system comprising a plurality of microfluidic channels.
Fig. 1C schematically illustrates a device for mechanical phenotyping of cells, the device comprising a microwell.
Fig. 2 illustrates signals from an ultrasonic detection unit generated when detecting a response acoustic wave from the sample fluid, with and without a cell present at the analysis position.
Fig. 3A schematically illustrates an ultrasound generation unit in the form of an optoacoustic transducer, OAT, comprising a light source and a metallic layer.
Fig. 3B schematically illustrates an alternative implementation of the optoacoustic transducer, OAT, further comprising a waveguide and a grating coupler.
Fig. 4A schematically illustrates an optical ultrasound transducer based on a Mach Zehnder interferometer.
Fig. 4B schematically illustrates an optical ultrasound transducer based on a Fabry-Perot interferometer.
Fig. 4C schematically illustrates an optical ultrasound transducer based on a micro-ring resonator.
Fig. 4D schematically illustrates a piezoelectric micromachined ultrasound transducer, pMUT.
Fig. 4E schematically illustrates a capacitive micromachined ultrasound transducer, cMUT.
Fig. 4F schematically illustrates a thin-film bulk acoustic resonator, FBAR.
Fig. 4G schematically illustrates a solidly mounted resonator, SMR, i.e., a FBAR mounted on an acoustic reflector.
Fig. 4H schematically illustrates an interdigital transducer, IDT.
Fig. 5 illustrates a schematic block diagram shortly summarizing the method for mechanical phenotyping of cells.

### Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

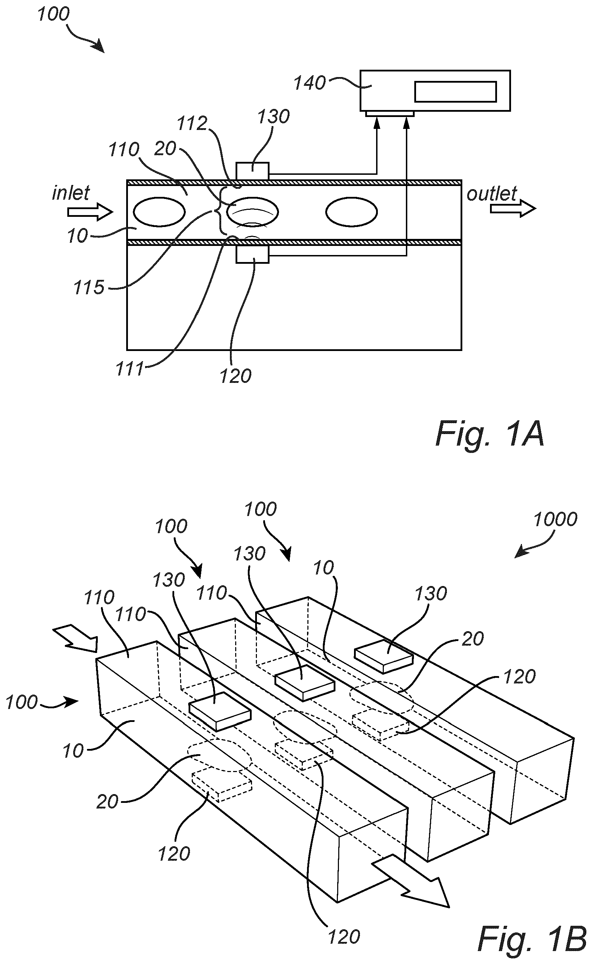

Fig. 1A schematically illustrates a device 100 for mechanical phenotyping of cells 20. In the present example, the device 100 is a device for flow cytometry. However, it serves to mention that the device 100 may alternatively be other types of devices for mechanical phenotyping of cells 20, as will be shown later.

The device 100 comprises a sample vessel 110, and more specifically a microfluidic channel 110. The microfluidic channel 110 is configured to transport a flow of a sample fluid 10 comprising cells 20 to the analysis position 115. The analysis position 115 is the position of the microfluidic channel 110 at which the sample fluid 10 and the cells 20 therein are analyzed by the device. In the present example, the microfluidic channel 110 is configured to transport cells 20 past the analysis position 115 one by one. By the present arrangement, the cells 20 may be analyzed individually.

At the analysis position 115, at a first side 111 of the microfluidic channel 110, the device 100 comprises an ultrasound generation unit 120. The ultrasound generation unit 120 is integrated with the microfluidic channel 110. The ultrasound generation unit 120 may be of a number of different types, the details of which will be discussed later.

The ultrasound generation unit 120 is configured to generate an acoustic wave. The ultrasound generation unit 120 is configured to transmit the acoustic wave across the microfluidic channel 110 at the analysis position 115. The present arrangement causes the acoustic wave to interact with the sample fluid 10 at the analysis position 115. During interaction between the acoustic wave and the sample fluid 10, the acoustic wave may be affected by the sample fluid 10, forming a response acoustic wave. In case only sample fluid 10 without any cell 20 is present at analysis position 115, the acoustic wave may be affected differently then compared to the case where a cell 20 is present in the analysis position 115.

At a second side 112 of the microfluidic channel 110, opposite to the first side 111, the device 100 comprises an ultrasound detection unit 130, at the analysis position 115. Also the ultrasound detection unit 130 is integrated with the microfluidic channel 110. By the present arrangement, the response acoustic signal may subsequently be detected by the ultrasound detection unit 130 on the second side 112 of the microfluidic channel 110.

It serves to mention that the ultrasound detection unit 130 may alternatively be arranged at the first side, i.e. at the same side as the ultrasound generation unit 120. The response acoustic wave may thus be formed by reflection and/or scattering of the acoustic wave by the sample fluid 10, back towards the first side of the microfluidic channel.

Upon detecting the response acoustic wave, the ultrasound detection unit 130 may generate a signal. Typically, the signal is an electrical signal, however it is conceivable that the signal may alternatively be an optical signal.

The signal generated by the ultrasound detection unit 130 may represent information of a cell 20 in the sample fluid 10, in case a cell 20 is present at the analysis position 115. When the acoustic wave is transmitted across the microfluidic channel 110 the acoustic wave typically interacts with at least a major part of the cell 20. By the present arrangement, the signal generated by the ultrasound detection unit 130 may represent overall information of a property of the cell 20. Thus, the signal may be regarded as representing an average of the property of the full cell 20. By way of example, the signal may represent information of a biomechanical property or a dimensional property of the cell.

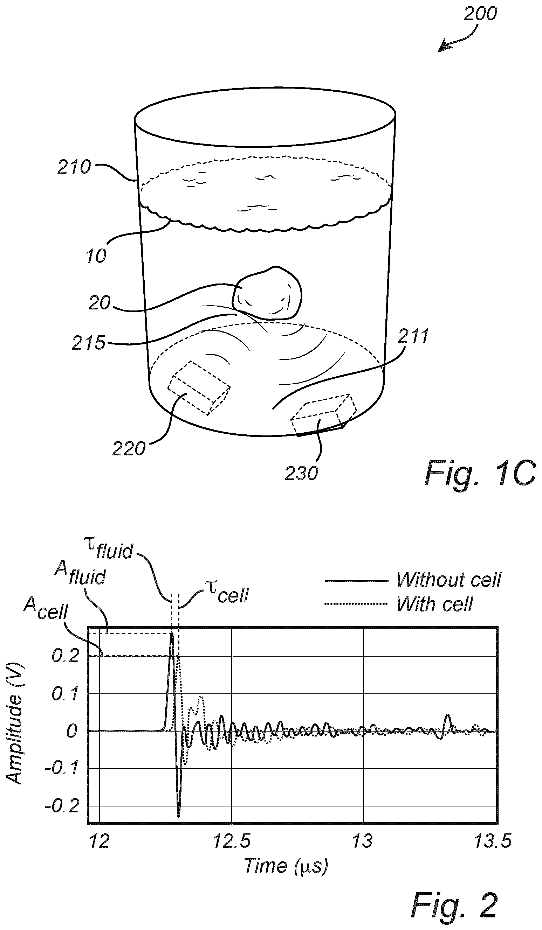

The device 100 may be configured to provide the signal to a processing unit 140. The processing unit 140 may be comprised in the device 100, or the processing unit 140 may alternatively be separate from the device 100. By way of example, the signal representing information of a cell in the sample fluid 10 may be sent to a processing unit 140 in an external computer (not shown here), wherein the processing unit 140 is configured to process the signal. In this manner, the processing unit 140 may process the signal in order to determine information about the cell. By way of example, the information may be acoustic impedance, speed of sound, density, or cell diameter. How such parameter may be extracted from the signal will be described in relation to Fig. 2.

Fig. 1B schematically illustrates a system 1000 for mechanical phenotyping of cells 20. The system 1000 comprises a plurality of devices 100, as described in relation to Fig. 1A. The devices 100 of Fig. 1B share the features with device 100 described in relation to Fig. 1A, the details of which are not repeated here.

In the present example, the devices 100 are devices for flow cytometry, and thus the sample vessel 110 of each device 100 is a microfluidic channel 110. However, it serves to mention that the system 1000 may alternatively comprise other types of devices for mechanical phenotyping of cells 20 and thus also other types of sample vessels 110.

As illustrated in Fig. 1B, the concept of the device 100 may be extended to a plurality of parallel devices 100, each configured to analyze a sample fluid 10 and the cells 20 therein. In such an arrangement, each microfluidic channel 110 may extend in a flow direction of the sample fluid 10. The plurality of microfluidic channels 110 may be arranged in parallel with one another, in a layer extending in a plane, to form an array of microfluidic channels 110.

As illustrated in Fig. 1B, the plurality of ultrasound generation units 120 may be arranged in another layer extending in another plane being parallel to the plane of the microfluidic channels 110, as for example below the plane of the microfluidic channels 110. Further, the plurality of ultrasound detection units 130 may be arranged in yet another layer extending in yet another plane being parallel to the plane of the microfluidic channels 110, as for example above the plane of the microfluidic channels 110.

In the manner described above, a large number of devices 100 may be arranged and operating in parallel to perform a large number of analysis simultaneously, thereby significantly increasing throughput.

Although the drawings of Fig. 1A and 1B illustrate a device 100 for mechanical phenotyping that, when in use, have the ultrasound generation unit 120, the sample vessel 110 (i.e. the microfluidic channel), and the ultrasound detection unit 130 stacked in the vertical direction, from bottom to top, it should be realized that also other configurations are conceivable. By way of example, the device 100 may alternatively be configured such that, when in use, the ultrasound generation unit 120, the sample vessel 110, and the ultrasound detection unit 130 are stacked in the horizontal direction, e.g. from left to right in the drawings.

Fig. 1C schematically illustrates a device 200 for mechanical phenotyping of cells 20. The device 200 comprises a sample vessel 210, which in the present example is a microwell 210. The microwell 210 is configured to hold the sample fluid 10 comprising cells 20 at an analysis position 215. Device 200 shares some of the features with device 100 described in relation to Fig. 1A, the details of which are not repeated here.

At a first side 211 of the microwell 210, the device 200 comprises an ultrasound generation unit 220, configured to generate an acoustic wave to be transmitted into the microwell 210. Interaction between the acoustic wave and the sample fluid 10 in the analysis position 215 may cause at least some of the acoustic wave to be reflected and/or scattered back towards the first side of the microwell, thereby forming a response acoustic wave. In case only sample fluid 10 without any cell 20 is present at analysis position 215, the acoustic wave may be affected differently then compared to the case where a cell 20 is present in the analysis position 215.

The device 200 further comprises an ultrasound detection unit 230 arranged at the first side 211 of the microwell 210, i.e. at the same side of the microwell 210 at which also the ultrasound generation unit 220 is arranged. By the present arrangement, the response acoustic signal being reflected back towards the first side 211, may subsequently be detected by the ultrasound detection unit 230.

It serves to mention that the ultrasound detection unit 230 may alternatively be arranged at a second side of the microwell 210, opposite to the first side 211, to detect a response acoustic wave being transmitted across the microwell 210.

The signal generated by the ultrasound detection unit 230 may represent information of a cell 20 in the sample fluid 10, in case a cell 20 is present at the analysis position 215. By way of example, the signal may represent information of a biomechanical property or a dimensional property of the cell. Similar to the device 100 described in relation to Fig. 1A, the device 200 may be configured to provide the signal to a processing unit (not shown here). The processing unit 140 may process the signal in order to determine information about the cell.

It should be realized that the device 200 may be extended into a plurality of devices 200 forming a system, similar to the system as described in relation to Fig. 1B. In this manner, a large number of devices 200 comprising microwells 310 may be arranged and operating in parallel to perform a large number of analysis simultaneously, thereby significantly increasing throughput.

Although the drawing of Fig. 1C illustrates a device 200 for mechanical phenotyping that, when in use, have the ultrasound generation unit 220 and the ultrasound detection unit 230 arranged below the bottom surface of the sample vessel 210 (i.e. the microwell), it should be realized that also other configurations are conceivable. By way of example, the device 200 may alternatively be configured such that, when in use, the ultrasound generation unit 120 and the ultrasound detection unit 130 are arranged on opposite lateral sides of the sample vessel 110, forming a horizontal stack, e.g. from left to right in the drawing.

Fig. 2 illustrates signals from an ultrasonic detection unit generated when detecting a response acoustic wave from the sample fluid, with and without a cell present at the analysis position.

In the present description, it is assumed that the ultrasound generation unit and the ultrasound detection unit are arranged on opposite sides of the sample vessel, as illustrated in Fig. 1A. In said arrangement the acoustic wave is transmitted from the ultrasound generation unit at a first side of the sample vessel, transmitted across the sample vessel, wherein the acoustic wave may interact with the sample fluid and a cell therein, forming a response acoustic wave being detected by the ultrasound detection unit on a second side of the sample vessel. However, it should be understood that the ultrasound generation unit and the ultrasound detection unit may alternatively be arranged on the same side of the sample vessel, such that the ultrasound detection signal may detect a response acoustic wave being scattered back towards the same side at which it was transmitted.

The acquisition of the signal may be triggered upon transmission of the acoustic wave from the ultrasound generation unit into the sample vessel, here referred to as t = 0. The response acoustic wave may be detected by the ultrasound detection unit at a slightly later point in time, *t* = *τ*.

The acquired time traces of the signals show the arrival time of the response acoustic wave with the presence (dotted curve) of a cell (t *= τ_{cell}*) and absence (solid curve) of a cell (t *= τ_{fluid}*)*.* The presence of the cell delays the arrival time of the response acoustic wave and reduces its amplitude, as compared to the case when no cell is present in the analysis position. From this information, the speed of sound, acoustic impedance, and density of the cell may be determined.

From the information of the detected amplitude (*A_{cell}*) for the case when a cell is present in the analysis position, and the amplitude (*A_{fluid}*) for the case when only sample fluid without any cell is present in the analysis position, the acoustic impedance (*Z_{cell}*) of the cell may be determined. By way of example, the situation may be described by a three-layer system wherein the top and bottom layers represent the sample fluid with acoustic impedance *Z_{fluid}*, and wherein the middle layer represents the cell having a diameter *d_{cell}* and acoustic impedance *Z_{cell}*. By deriving the acoustic wave propagation across the sample vessel, i.e. across the three layers (x-axis), it may be shown that the amplitude ratio may be expressed as: $\begin{matrix}\frac{{A}_{cell}}{{A}_{fluid}} = {e}^{i \left({k}_{fluid}-{k}_{cell}\right) {d}_{cell}} ⋅ \frac{4 {Z}_{fluid} {Z}_{cell}}{{\left({Z}_{fluid}+{Z}_{cell}\right)}^{2}} \\ ⋅ \frac{1}{1 - {e}^{- 2 {ik}_{cell} {d}_{cell}} {\left(\frac{{Z}_{fluid} - {Z}_{cell}}{{Z}_{fluid} + {Z}_{cell}}\right)}^{2}}\end{matrix}$ (1) In this equation *k_{fluid} and k_{cell}* are the wavenumbers of the respective media. The first term describes the phase shift due to the transition from medium 1 (fluid) to medium 2 (cell). The second term describes the transmitted acoustic intensity through the layers, and the third term accounts for the multiple reflections inside the layers. Thus, for the measured absolute values of the amplitudes, the amplitude ratio may be expressed as : $\frac{{A}_{cell}}{{A}_{fluid}} = \frac{4 {Z}_{fluid} {Z}_{cell}}{{\left({Z}_{fluid}+{Z}_{cell}\right)}^{2}}$ (2)

As the acoustic impedance of the sample fluid (*Z_{fluid}*) may be known, the acoustic impedance of the cells (*Z_{cell}*) may be determined from this expression. From equation (2), it is realized that when there is no cell present in the analysis position, *Z_{fluid}* = *Z_{cell},* the ratio will be equal to 1, as expected, meaning that there is no loss of the acoustic wave due to any reflection at the interface between sample fluid and cell.

By way of example, the cell diameter (*d_{cell}*) and the speed of sound of the cell (*v_{cell}*) may be determined by combined analysis of the acoustic resonance spectrum and time-of-flight of the acoustic pulses.

It may be assumed that the cell membrane may form an acoustic resonant cavity, with the resonance frequency given by: ${f}_{m} = m {v}_{cell} / \left(2{d}_{cell}\right)$ (3) where *m* = 1, 2, 3..., is the mode number. From simulations it may be realized that the thinner the cell, the broader the spacing of the resonant modes. From measurements, the spectral width (Δ*f*) may be determined, and the ratio between the speed of sound and the diameter of the cell may be expressed as: $\frac{{v}_{cell}}{{d}_{cell}} = 2 Δ f$ (4)

Further, the delay between transmission and detection when an acoustic wave is transmitted across the sample vessel, may depend on the width (*w*) of the sample vessel and the speed of sound (*v*) of the medium between the generator and the detector, i.e. at the analysis position.

The width (*w*) of the sample vessel is fixed and known. For the case of a cell not being present, and thus only sample fluid without a cell being present at the analysis position, the delay (*τ_{fluid}*) may be directly determined from the recorded response acoustic wave. Thus, the relation between the pulse arrival time and the speed of sound for the sample fluid without any cell may be expressed as: ${τ}_{fluid} = \frac{w}{{v}_{fluid}}$ (5) from which the speed of sound in the sample fluid may be determined.

In case a cell is present at the analysis position a different delay (*τ_{cell}*) may be detected, as compared to when only sample fluid without any cell is present at the analysis position. The relation between the pulse arrival time and the speed of sound in the sample fluid with a cell present in the analysis position may be expressed as: ${τ}_{cell} = \frac{w - {d}_{cell}}{{v}_{fluid}} + \frac{{d}_{cell}}{{v}_{cell}}$ (6)

Given that the width (*w*) of the sample vessel is known, and that the delays (*τ_{fluid}, τ_{cell}*) may be directly measured, the speed of sound of the cell (*v_{cell}*) and the diameter of the cell (*d_{cell}*) may be derived from equations (4) and (6).

Further, from the above-determined properties, also the density (*ρ_{cell}*) of a cell may be determined as: ${ρ}_{cell} = \frac{{Z}_{cell}}{{v}_{cell}}$

Calculation of these properties does not require heavy computational power. Therefore, the present approach allows for real-time presentation of the properties, such as for example a histogram of the three physical propertied.

Further, the calculation of these properties does not require precise knowledge of cell dimensions. Thus, the present approach is versatile in that it may be applied for a wide range of cell sizes, and even for sample fluids comprising varying cell sizes.

The above description of determination of acoustic impedance, cell diameter, and speed of sound, is based on a simple model of a high-frequency acoustic wave propagating and interaction with a cell. However, as an alternative, for example a neural network or a machine-learning based approach may be utilized to extract the varying parameters of interest in parallel. The training of the neural network may rely on the use of simulation tools to generate sets of acoustic transmission data based on varying input parameters of the cell, such as impedance, viscosity, diameter, and morphological specifications, such as aspect ratio and roughness.

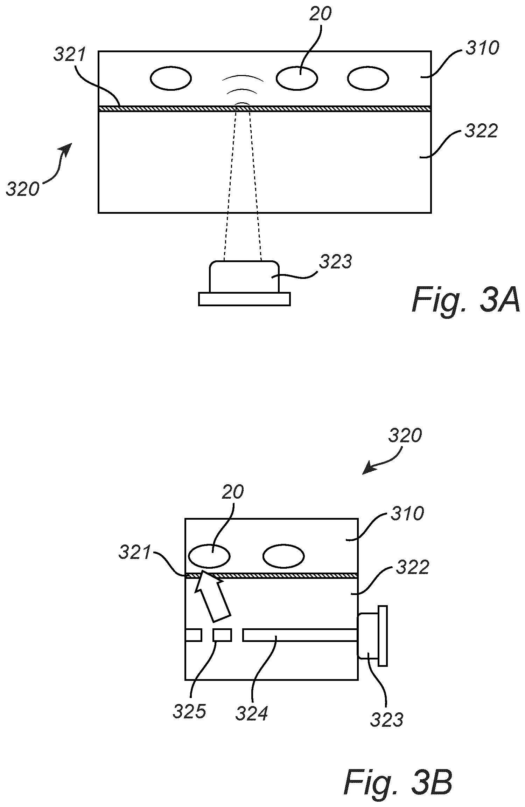

Fig. 3A schematically illustrates an ultrasound generation unit 320 in the form of an optoacoustic transducer 320, OAT.

The OAT comprises a layer 321 of a metal film deposited onto a substrate 322. The substrate 322 as illustrated in Fig. 3A forms part of the sample vessel 310 in that the substrate forms a wall of the sample vessel 310. However, it should be understood that the substrate 322 may alternatively be a part which is separate from the sample vessel 310. The layer 321 may be provided on a surface of the substrate facing the sample fluid 10 in the sample vessel 310.

The OAT further comprises a light source 323, which in the present example is a pulsed laser. The light pulse from the light source 323 is guided through the optically transparent substrate towards the metal layer 321. When the light pulse reaches the metal layer 321, energy in the light pulse may be absorbed by the metal layer 321 and converted into an acoustic wave.

In the manner described above, an ultrasound generation unit 320 may be provided that is capable of producing a high frequency acoustic wave. Thereby, an acoustic wave may be generated having a wavelength that does not exceeding the diameter of the cell 20.

Moreover, the metal layer 321 is configured to block the light pulse from the light source 323. In this manner, the light pulse is prevented from entering into the sample fluid 10 in the sample vessel 310, thereby preventing potential light damage or toxicity on cells.

Fig. 3B schematically illustrates an alternative implementation of the optoacoustic transducer 320, OAT. In this alternative implementation, the substrate 322 may comprise a waveguide 324 extending in a plane parallel to the plane of the metal layer 321. The waveguide 324 may be configured to guide the light pulse from the light source 323 along the plane parallel to the metal layer 321. The waveguide 324 may be provided with a grating coupler 325, configured to redirect the light at the analysis position towards the metal layer 321.

It serves to mention that, as an alternative to the ultrasound generation unit being an optoacoustic transducer, the ultrasound generation unit may instead be an electroacoustic transducer, EAT, such as a Piezoelectric Micromachined Ultrasonic Transducer, pMUT, Capacitive Micromachined Ultrasonic Transducer, cMUT, thin-film bulk acoustic resonator, FBAR, or solidly-mounted resonator, SMR, or interdigital transducers, IDTs.

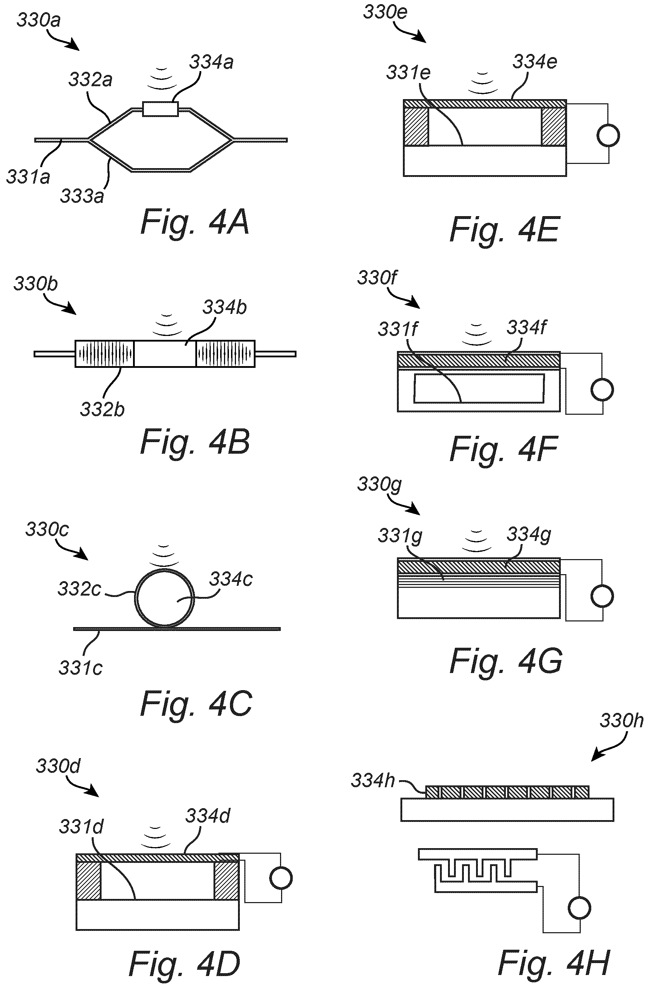

Figs 4A-4E schematically illustrate different alternatives for the ultrasound detection unit. Figs 4A-4C illustrate alternatives comprising optical ultrasound transducers based on integrated photonics. Figs 4D-4H illustrate alternatives comprising a micromachined electrical ultrasound transducers.

Fig. 4A schematically illustrates an optical ultrasound transducer 330a based on a Mach Zehnder interferometer. A light beam propagating in a waveguide 331a is split up into two separate waveguiding arms 332a, 333a. One of the arms 332a comprises a phase shifting element 334a sensitive to incident acoustic waves such that the optical path length through the arm 332a may be changed in dependence of the incident acoustic wave. The incident response acoustic wave may thus cause a phase shift for the light passing through that arm 332a with respect to the other arm 333a. Upon recombination of the light in the two arms 332a, 333a, the modulated phase difference caused by the response acoustic wave between the two light signals results in an amplitude modulation, which may be used to detect the response acoustic wave.

Fig. 4B schematically illustrates an optical ultrasound transducer 330b based on a Fabry-Perot interferometer. This optical ultrasound transducer 330b works in a similar manner as the above-described Mach Zehnder interferometer, but instead comprises a Fabry-Perot cavity 332b with a phase shifting element 334b sensitive to incident acoustic waves arranged in the Fabry-Perot cavity 332b, which affects the phase of the light transmitted through the Fabry-Perot cavity 332b.

Fig. 4C schematically illustrates an optical ultrasound transducer 330c based on a micro-ring resonator 332c. The micro-ring resonator 332c is coupled to a waveguide 331c and integrated with an acoustic membrane 334c across the micro-ring resonator 332c. Light with a broadband spectrum may be transmitted in the waveguide 331c, and the part of the spectrum corresponding to the resonance frequency of the micro-ring resonator 332c is coupled into the micro-ring resonator 332c. The remaining light spectrum may therefore show a dip at the resonance frequency. The resonance frequency is dependent on the circumference of the micro-ring resonator 332c. An incident response acoustic wave may strain the membrane 334c and therefore affect the micro-ring circumference. This may cause a shift in the resonance frequency, which may be detected in the remaining light spectrum.

Fig. 4D schematically illustrates a piezoelectric micromachined ultrasound transducer 330d, pMUT. The pMUT 330d comprises a membrane 334d suspended in relation to a cavity surface 331d, wherein the membrane 334d comprises a thin piezoelectric film providing an electrical signal based on vibrations of the membrane.

Fig. 4E schematically illustrates a capacitive micromachined ultrasound transducer 330e, cMUT. The cMUT comprises a membrane 334e suspended in relation to a cavity surface 331e, wherein a top electrode is provided on the membrane 334e and a bottom electrode is provided at the cavity surface 331e, such that a varying capacitance is provided based on vibrations of the membrane 334e.

Fig. 4F schematically illustrates a thin-film bulk acoustic resonator 330f, FBAR. The FBAR comprises a piezoelectric film 334f arranged between two electrodes. The arrangement may have a free-standing resonator structure, i.e. the piezoelectric film 334f and electrodes may be suspended in relation to a cavity surface 331f, wherein the piezoelectric film 334f may provide an electrical signal based on vibrations of the piezoelectric film.

Fig. 4G schematically illustrates a solidly-mounted resonator 330g, SMR. The SMR comprises a piezoelectric film 334g arranged between two electrodes. The arrangement may be provided on one or more acoustic mirrors 331g.

Fig. 4H schematically illustrates an interdigital transducer 330h, IDT. The IDT comprises a set of two interlocking comb-shaped arrays of metallic electrodes deposited on piezoelectric film 334h.

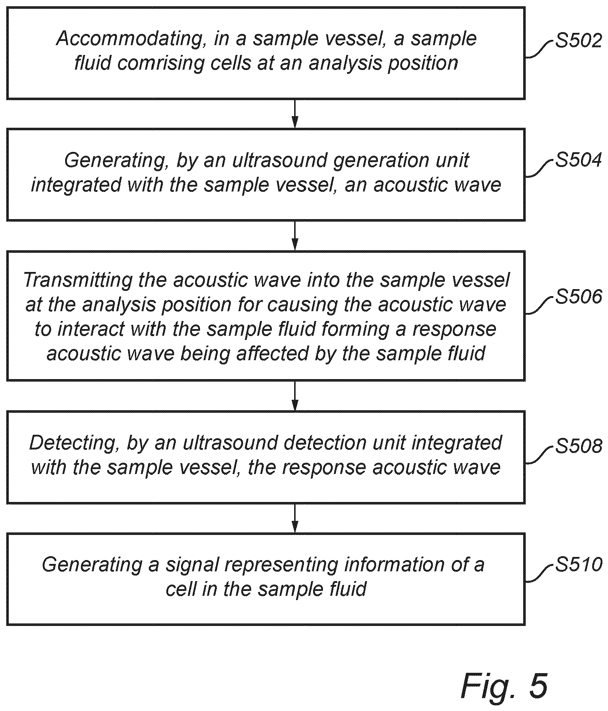

Fig. 5 illustrates a schematic block diagram shortly summarizing the method for mechanical phenotyping of cells. It should be understood that the steps of the method, although listed in a specific order herein, may be performed in any order suitable.

The method may comprise accommodating S502, in a sample vessel, a sample fluid comprising cells at an analysis position.

The method may comprise generating S504, by an ultrasound generation unit integrated with the sample vessel, an acoustic wave.

The method may comprise transmitting S506 the acoustic wave into the sample vessel at the analysis position for causing the acoustic wave to interact with the sample fluid forming a response acoustic wave being affected by the sample fluid.

The method may comprise detecting S508, by an ultrasound detection unit integrated with the sample vessel, the response acoustic wave.

The method may comprise generating S510 a signal representing information of a cell in the sample fluid

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device for mechanical phenotyping of cells, said device comprising:
a sample vessel configured to accommodate a sample fluid comprising cells at an analysis position;
an ultrasound generation unit integrated with the sample vessel, wherein the ultrasound generation unit is configured to generate an acoustic wave and to transmit the acoustic wave into the sample vessel at the analysis position for causing the acoustic wave to interact with the sample fluid forming a response acoustic wave being affected by the sample fluid; and
an ultrasound detection unit integrated with the sample vessel, wherein the ultrasound detection unit is configured to detect the response acoustic wave and to generate a signal representing information of a cell in the sample fluid.

2. The device according to claim 1, wherein the signal generated by the ultrasound detection unit represents overall information of a property of the cell.

3. The device according to any one of claims 1 or 2, wherein the signal generated by the ultrasound detection unit represents information of any one of a biomechanical property or a dimensional property of the cell.

4. The device according to any one of the preceding claims, wherein the signal generated by the ultrasound detection unit represents information of any one of a delay from transmission of the acoustic wave into the sample vessel to detection of the response acoustic wave by the acoustic wave detection unit, or a difference in an amplitude of the response acoustic wave detected by the ultrasound detection unit with respect to an amplitude of the acoustic wave transmitted into the sample vessel.

5. The device according to any one of the preceding claims, further comprising a processing unit, wherein the processing unit is configured to determine any one of an acoustic impedance of the cell or a size of the cell, based on the signal from the ultrasound detection unit.

6. The device according to any one of the preceding claims, wherein the ultrasound generation unit is a high frequency acoustic wave (HFAW) generation unit, configured to generate an acoustic wave with a wavelength not exceeding a diameter of the cell.

7. The device according to any one of the preceding claims, wherein the ultrasound generation unit comprises an optoacoustic transducer, OAT.

8. The device according to any one of the preceding claims, wherein the ultrasound generation unit comprises an electroacoustic transducer, EAT.

9. The device according to any one of the preceding claims, wherein the ultrasound detection unit comprises an optical ultrasound transducer based on integrated photonics.

10. The device according to any one of claims 1 to 8, wherein the ultrasound detection unit comprises any one of a micromachined ultrasound transducer or a thin-film bulk acoustic resonator.

11. The device according to any one of the preceding claims, wherein the device is a device for flow cytometry, and
wherein the sample vessel is a microfluidic channel configured to transport a flow of the sample fluid comprising cells to the analysis position.

12. The device according to claim 11, wherein the microfluidic channel is configured to transport the sample fluid for transporting cells past the analysis position one by one.

13. The device according to any one of claims 1 to 10, wherein the sample vessel is a microwell configured to hold the sample fluid comprising cells at the analysis position.

14. A system for mechanical phenotyping of cells, said system comprising a plurality of devices according to any one of the preceding claims.

15. A method for mechanical phenotyping of cells, said method comprising:
accommodating, in a sample vessel, a sample fluid comprising cells at an analysis position;
generating, by an ultrasound generation unit integrated with the sample vessel, an acoustic wave;
transmitting the acoustic wave into the sample vessel at the analysis position for causing the acoustic wave to interact with the sample fluid forming a response acoustic wave being affected by the sample fluid; and
detecting, by an ultrasound detection unit integrated with the sample vessel, the response acoustic wave; and
generating a signal representing information of a cell in the sample fluid.
